# EUROPEAN PATENT APPLICATION

(11) **EP 4 783 086 A1**
(43) Date of publication of application: **29.07.2026**
(21) Application number: 24897017.0
(22) Date of filing: 28.08.2024
(51) Int. Cl.: G06Q 10/0639

(54) **SKILL MANAGEMENT SYSTEM**

(30) Priority: 28.11.2023 JP 2023200709
(71) Applicant: Mitsubishi Heavy Industries, Ltd., Chiyoda-ku Tokyo 100-8332 (JP)
(72) Inventor: SHIROTORI, Kento, Tokyo 100-8332 (JP); YAMAZAKI, Shinsuke, Tokyo 100-8332 (JP); TORIMOTO, Kazutaka, Nagoya-shi, Aichi 460-0008 (JP)
(74) Representative: Hoffmann Eitle
(86) International application number: PCT/JP2024/030698
(87) International publication number: WO 2025/115326

(57) **Abstract**

A skill management system for managing the skill of a worker comprises: an actual task database for recording actual task data that is data of an actual task acquired through performance by the worker; an educational task database for recording an educational task data that is data of an educational task acquired through performance by the worker; and a control unit for executing processing based on the actual task data and the educational task data. The actual task data and the educational task data each include a flag for identifying the actual task data or the educational task data, and skill data indicating the skill of the worker associated with the flag.

## Description

### Technical Field

The present disclosure relates to a skill management system.

### Background Art

In the related art, an education schedule management device that assists in education of a worker is known (for example, see PTL 1). In the education schedule management device, a task performance value included in repair performance data corresponding to a worker who has taken educational content is compared with a reference performance value that is a reference, and it is determined that follow-up education is unnecessary in a case where the task performance value satisfies the reference performance value, while it is determined that follow-up education is necessary in a case where the task performance value does not satisfy the reference performance value.

### Citation List

### Patent Literature

[PTL 1] Japanese Unexamined Patent Application Publication No. 2012-185216

### Summary of Invention

### Technical Problem

In general, predetermined education is performed for a worker who executes a task at regular intervals. In this case, there is a possibility that unnecessary education is performed for a worker who is performing an appropriate task, and it is difficult to execute a flexible operation of education. In addition, it is necessary to appropriately understand whether skill of a worker in an actual task is skill acquired by the worker through education, as evidence of education for the actual task.

Therefore, an object of the present disclosure is to provide a skill management system capable of appropriately managing skill of a worker based on an actual task of the worker and education for the worker.

### Solution to Problem

A skill management system of the present disclosure is a skill management system that manages skill of a worker, the skill management system including: an actual task database that records actual task data that is data of an actual task acquired by the worker performing a task; an educational task database that records educational task data that is data of an educational task acquired by the worker performing a task; and a control unit that executes processing which is based on the actual task data and the educational task data, in which the actual task data and the educational task data each include a flag for identifying whether data is the actual task data or the educational task data, and skill data indicating the skill of the worker, the skill data being associated with the flag.

### Advantageous Effects of Invention

According to the present disclosure, it is possible to appropriately manage the skill of the worker based on the actual task of the worker and the education for the worker.

### Brief Description of Drawings

FIG. 1 is a diagram of a skill management system according to the present embodiment.
FIG. 2 is an explanatory diagram functionally showing the skill management system according to the present embodiment.
FIG. 3 is a flowchart related to the skill management system according to the present embodiment.
FIG. 4 is a diagram of a screen displayed on a display unit of the skill management system.

### Description of Embodiments

Embodiments according to the present disclosure will be described in detail below with reference to the drawings. Note that this disclosure is not limited to the embodiment. Further, components of the following embodiments include components that can be easily substituted by those skilled in the art or components that are substantially the same as the components of the following embodiments. Further, the components described below can be combined as appropriate, and in a case where there are a plurality of embodiments, the embodiments can also be combined.

### [Present Embodiment]

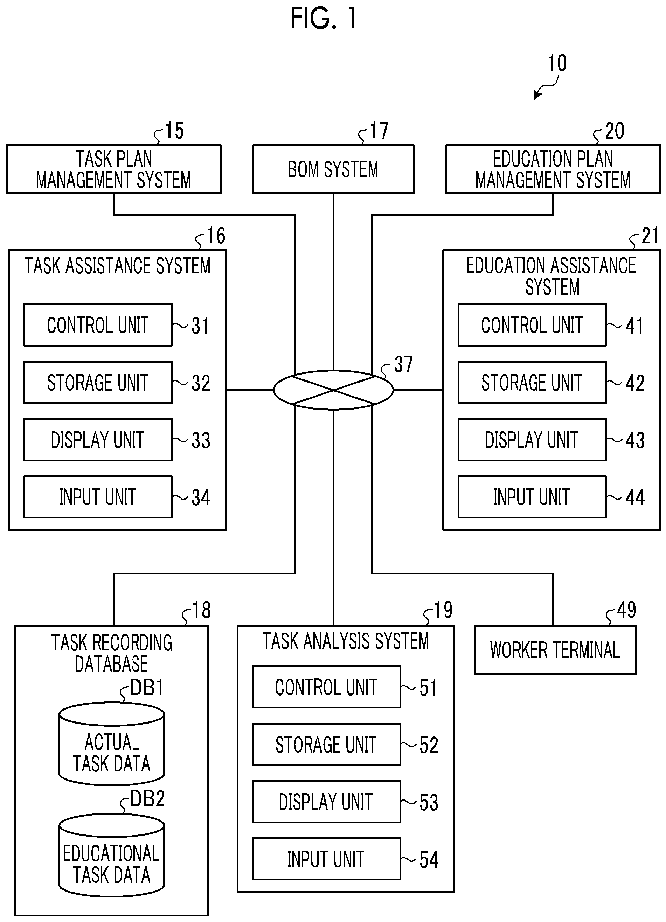

A skill management system 10 according to the present embodiment is a system that manages skill of a worker who performs a maintenance task for an aircraft. The skill management system 10 is incorporated in, for example, a system that manages and assists the maintenance task for the aircraft as an asset, and a plurality of systems are integrated therein. The skill management system 10 manages skill in an actual task of the maintenance task and in an educational task such as training of the maintenance task. The skill management system 10 will be described with reference to FIG. 1.

### (Skill Management System)

FIG. 1 is a diagram of a skill management system according to the present embodiment. As shown in FIG. 1, the skill management system 10 includes a task plan management system 15, a task assistance system 16, a bill of materials (BOM) system 17, a task recording database 18, a task analysis system 19, an education plan management system 20, and an education assistance system 21. In addition, these systems and the database are connected to each other via a communication network 37, and communicate information with each other.

The task plan management system 15 is a system that plans and manages the maintenance task for the aircraft. The task plan management system 15 provides information for planning the maintenance task to an administrator who manages a task, provides information on a planned task to the task assistance system 16, or manages progress of the task.

The task assistance system 16 is a system that assists the maintenance task planned in the task plan management system 15, and specifically, presents a task procedure of the maintenance task to a worker or executes task record of the maintenance task. The task assistance system 16 may be a wearable terminal or a stationary terminal, and is not particularly limited. The task assistance system 16 includes a control unit 31, a storage unit 32, a display unit 33, and an input unit 34.

The control unit 31 includes, for example, an integrated circuit such as a central processing unit (CPU). The control unit 31 executes data processing for assisting the maintenance task. The storage unit 32 is any storage device such as a semiconductor storage device or a magnetic storage device. The storage unit 32 stores information acquired from various systems, information generated by various types of processing, and the like. The display unit 33 is, for example, a display device such as a liquid crystal display. The input unit 34 is, for example, an input device such as a keyboard and a mouse.

The task assistance system 16 presents information on the maintenance task planned in the task plan management system 15 to the worker via the display unit 33. In addition, the task assistance system 16 generates information on the progress of the maintenance task and information (actual task data) on the actual task of the maintenance task by inputting information on the task record of the maintenance task by the worker via the input unit 34. The task assistance system 16 outputs the generated actual task data of the maintenance task to the task recording database 18.

The BOM system 17 stores information for managing the maintenance task, and has a data format defined in advance. The BOM system 17 stores information that serves as a reference for the maintenance task. The information that serves as a reference for the maintenance task is information on a resource in which the task procedure of the maintenance task, a location required for the maintenance task, equipment required for the maintenance task, parts required for the maintenance task, personnel for the maintenance task, and a task duration required for the maintenance task are associated with each other. The BOM system 17 provides information on the resource before the maintenance task to the task plan management system 15 or acquires information on the resource after the maintenance task, which is acquired from the task plan management system 15.

The task recording database 18 stores task record data of the maintenance task. The task record data includes actual task data acquired in the actual task of the maintenance task and educational task data acquired in the educational task such as training. The actual task data is acquired in the task assistance system 16 described above, and the educational task data is acquired in the education assistance system 21 described later. The actual task data and the educational task data each include a flag for identifying whether data is the actual task data or the educational task data, and skill data indicating the skill of the worker, the skill data being associated with the flag. The skill data is a task duration required for a task. The skill data is not particularly limited to the task duration, and any index capable of evaluating the skill of the worker may be used.

The task recording database 18 includes an actual task database DB1 that recordings the actual task data and an educational task database DB2 that recordings the educational task data. In the actual task database DB1, as the actual task data, a date and time of the task, information on a maintenance location input by the worker, information on which an operation of the maintenance task by the worker is recorded, image information acquired by an imaging device, and the like are recorded, in addition to the flag and the skill data. In the educational task database DB2, as the educational task data, the date and time of the task, the information on the maintenance location input by the worker, the information on which the operation of the maintenance task by the worker is recorded, the image information acquired by the imaging device, and the like are recorded in the same manner as the actual task database DB1, in addition to the flag and the skill data. The task recording database 18 provides the task record data to the task plan management system 15, acquires the task record data from the task assistance system 16 and the education assistance system 21, or provides the task record data to the task analysis system 19.

The task analysis system 19 acquires the actual task data and the educational task data from the task recording database 18, analyzes the data, and provides various types of information as an analysis result to the administrator and the worker. The task analysis system 19 scores the skill of the worker as the analysis, and specifically, calculates the task duration based on the skill data as the skill of the worker.

The task analysis system 19 includes a control unit 51, a storage unit 52, a display unit 53, and an input unit 54, in the same manner as the task plan management system 15. The control unit 51, the storage unit 52, the display unit 53, and the input unit 54 are the same as the control unit 31, the storage unit 32, the display unit 33, and the input unit 34 of the task assistance system 16, and thus the description thereof will be omitted.

The task analysis system 19 acquires the actual task data and the educational task data from the task recording database 18, analyzes the skill of the worker, and displays the analysis result on the display unit 53, thereby enabling the management of the skill of the worker.

The education plan management system 20 is a system that plans and manages the educational task such as the training for the maintenance task, and has the same configuration as the task plan management system 15. The education plan management system 20 provides information for planning the educational task to an administrator who manages the educational task, provides information on a planned educational task to the education assistance system 21, or manages progress of the educational task.

The education assistance system 21 is a system that assists the planned educational task in the education plan management system 20, and has the same configuration as the task assistance system 16. The education assistance system 21 presents a task procedure of the educational task to the worker or executes task record of the educational task. The education assistance system 21 includes a control unit 41, a storage unit 42, a display unit 43, and an input unit 44, in the same manner as the task assistance system 16. The control unit 41, the storage unit 42, the display unit 43, and the input unit 44 are the same as the control unit 31, the storage unit 32, the display unit 33, and the input unit 34 of the task assistance system 16, and thus the description thereof will be omitted.

A worker terminal 49 is connected to the task assistance system 16 and the education assistance system 21 via the communication network 37. Although not shown, the worker terminal 49 includes a display unit and an input unit, in the same manner as the task assistance system 16 and the education assistance system 21, and can display information for assisting the maintenance task or input information for recording the task.

The education assistance system 21 presents information on the educational task planned in the education plan management system 20 to the worker via the display unit 43. In addition, the education assistance system 21 generates information on the progress of the educational task and information (educational task data) on the educational task by inputting information on the task record of the educational task by the worker via the input unit 44. The education assistance system 21 outputs the generated educational task data of the educational task to the task recording database 18.

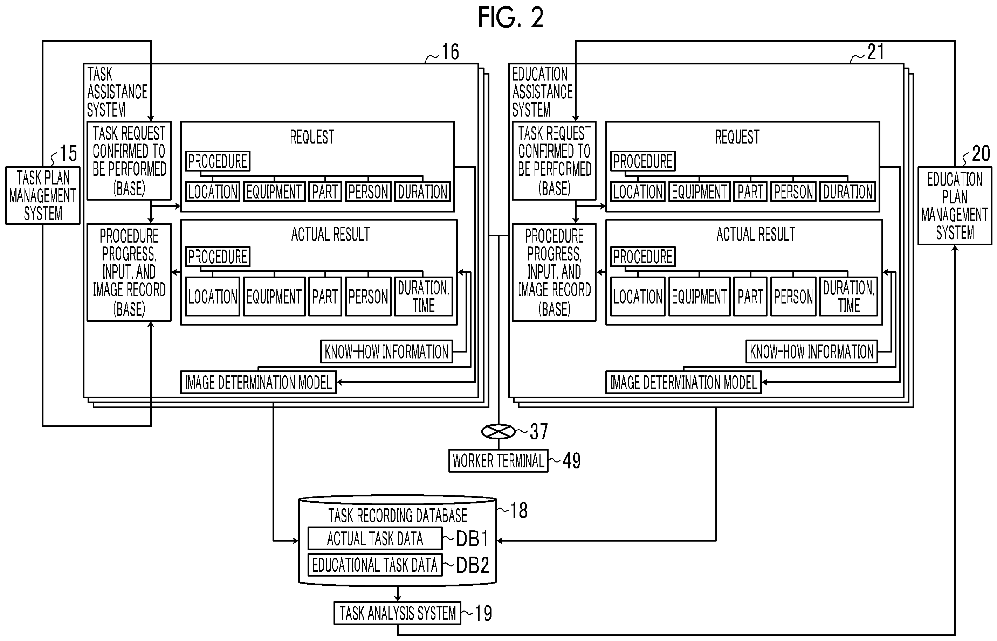

Next, an outline of the functions of the skill management system 10 will be described with reference to FIG. 2. FIG. 2 is an explanatory diagram of an example functionally showing the skill management system according to the present embodiment. As shown in FIG. 2, in the skill management system 10, the task plan management system 15 acquires information on the maintenance task to be requested in a case where there is an aircraft in which the maintenance task can be performed. In addition, the task plan management system 15 acquires information on the resource associated with the requested maintenance task from the BOM system 17. The task plan management system 15 acquires the degree of sufficiency of the resource associated with the requested maintenance task, based on the information on the progress of the maintenance task acquired by the task assistance system 16. The task plan management system 15 provides the acquired information on the requested maintenance task, the information on the resource associated with the requested maintenance task, and the degree of sufficiency of the resource as the resource information.

**In** addition, when the requested maintenance task is selected and confirmed, the task plan management system 15 outputs the resource information associated with the selected maintenance task to the task assistance system 16 as the task request data of the requested maintenance task.

In a case where the task assistance system 16 acquires the task request data from the task plan management system 15, the task assistance system 16 assists the maintenance task based on the task request data. The task assistance system 16 presents the task procedure of the maintenance task to the worker via the display unit 33. In addition, the task assistance system 16 outputs the actual task data input by the worker to the task recording database 18. The actual task data also includes know-how information input by the worker. Further, the task assistance system 16 outputs the task progress based on the task record input by the worker to the task plan management system 15.

The task plan management system 15 manages the task progress of the selected maintenance task, based on the information on the progress of the maintenance task acquired by the task assistance system 16.

The task analysis system 19 acquires the actual task data from the task recording database 18 and calculates an average value of the task duration of the maintenance task as an average duration, based on the actual task data. In addition, the task analysis system 19 compares the average duration of the maintenance task with the task duration of the worker, and provides notification to the worker or the administrator via the display unit 53 in a case where the task duration of the worker is long.

In the skill management system 10, in a case where the educational task is performed on the worker, the education plan management system 20 acquires the information on the resource associated with the requested educational task from the BOM system 17. The education plan management system 20 acquires the degree of sufficiency of the resource associated with the requested educational task, based on the information on the progress of the educational task acquired by the education assistance system 21. The education plan management system 20 provides the acquired information on the educational task, the information on the resource associated with the educational task, and the degree of sufficiency of the resource as the resource information.

In addition, when the educational task is selected and confirmed, the education plan management system 20 outputs the resource information associated with the selected educational task to the education assistance system 21 as the task request data of the educational task.

In a case where the education assistance system 21 acquires the task request data from the education plan management system 20, the education assistance system 21 assists the educational task based on the task request data. The education assistance system 21 presents the task procedure of the educational task to the worker via the display unit 43. In addition, the education assistance system 21 outputs the educational task data input by the worker to the task recording database 18. The educational task data also includes know-how information input by the worker. Further, the education assistance system 21 outputs the task progress based on the task record input by the worker to the education plan management system 20.

The education plan management system 20 manages the task progress of the selected maintenance task, based on the information on the progress of the maintenance task acquired by the education assistance system 21.

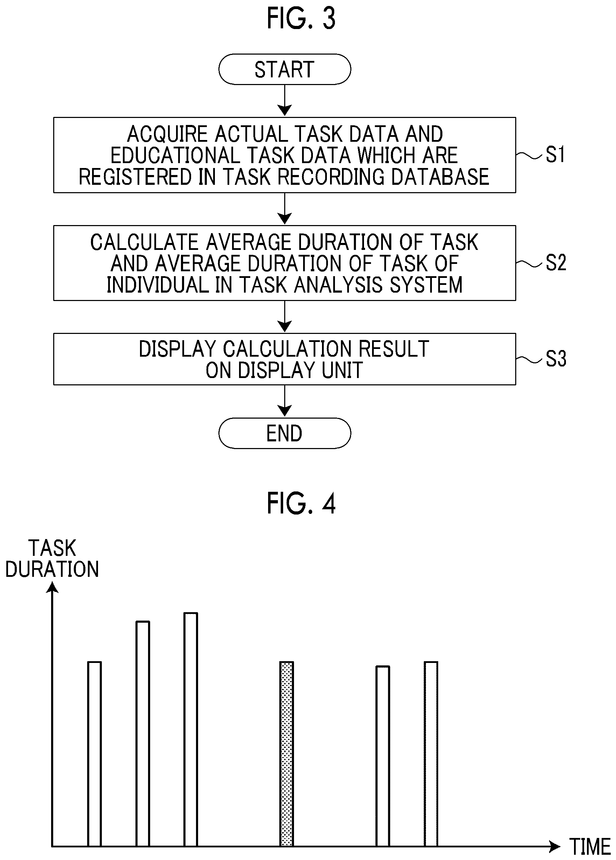

Here, in a case where the actual task data and the educational task data are registered in the task recording database 18, the task analysis system 19 can execute the management of the skill based on the actual task and the educational task by using the actual task data and the educational task data. As the management of the skill, for example, there is data processing shown in FIGS. 3 and 4. This is because the actual task data and the educational task data are different only in the flag for identifying the data type, and the data formats other than the flag are identical.

FIG. 3 is a flowchart related to the skill management system according to the present embodiment. FIG. 4 is a diagram of a screen displayed on a display unit of the skill management system. FIGS. 3 and 4 show data processing of an example of the management of the skill based on the actual task and the educational task.

As shown in FIG. 3, the control unit 51 of the task analysis system 19 acquires the actual task data and the educational task data which are registered in the task recording database 18 (step S1). Subsequently, the control unit 51 calculates the average duration of the entire maintenance task based on the actual task data, and the average duration of the actual task of the individual worker (step S2). Thereafter, the control unit 51 ends the processing by displaying the calculation result on the display unit 53 (step S3). As a result, the task analysis system 19 provides the information on the skill of the worker to the worker or the administrator.

In FIG. 3, in a case where the average duration of the actual task of the individual worker is longer than the average duration of the entire maintenance task by a predetermined amount of time, the control unit 51 may perform notification indicating that the education is required to the education plan management system 20.

In addition, the control unit 51 of the task analysis system 19 performs display shown in FIG. 4 by using the actual task data and the educational task data which are registered in the task recording database 18. As shown in FIG. 4, the control unit 51 displays, in chronological order, the task duration for the predetermined maintenance task based on the actual task data and the educational task data. In FIG. 4, the task duration based on the actual task data of the individual worker (white bar graph) and the task duration based on the educational task data (bar graph with hatching) are arranged in chronological order. As a result, it is possible to manage whether or not the skill of the worker before and after the education is improved.

In the present embodiment, the task duration is applied as the skill data, but the present disclosure is not particularly limited thereto, and the skill of the worker may be evaluated by using other indexes. In addition, in the present embodiment, the control unit 51 of the task analysis system 19 performs the skill management, but another system may perform the skill management, and the present disclosure is not particularly limited thereto. In addition, the control unit 51 may display the number of times the worker has performed a task based on the skill data on the display unit 53, based on the actual task data.

As described above, the skill management system 10 described in the present embodiment is understood as follows, for example.

A skill management system 10 according to a first aspect is a skill management system that manages skill of a worker, the skill management system including: an actual task database DB1 that records actual task data that is data of an actual task acquired by the worker performing a task; an educational task database DB2 that records educational task data that is data of an educational task acquired by the worker performing a task; and a control unit 51 that executes processing which is based on the actual task data and the educational task data, in which the actual task data and the educational task data each include a flag for identifying whether data is the actual task data or the educational task data, and skill data indicating the skill of the worker, the skill data being associated with the flag.

According to this configuration, it is possible to evaluate the skill of the worker by using the actual task data and the educational task data. Therefore, it is possible to determine the necessity of the education or to evaluate the presence or absence of the improvement in the actual task before and after the education, based on the task duration of the actual task. In addition, it is possible to evaluate whether skill of a worker in an actual task is skill acquired by the worker through education, as evidence of education for the actual task. As described above, it is possible to appropriately manage the skill of the worker based on the actual task of the worker and the education for the worker.

As a second aspect, in the skill management system 10 according to the first aspect, the skill data is a task duration required for a task.

According to this configuration, it is possible to use an index that can be easily acquired as an index for evaluating the skill of the worker.

As a third aspect, in the skill management system 10 according to the second aspect, the control unit 51 acquires an average duration of the task, and executes notification indicating that education is required in a case where the task duration of the actual task data is longer than the average duration by a predetermined amount of time.

According to this configuration, it is possible to prompt the worker who needs the education to receive the education.

As a fourth aspect, in the skill management system 10 according to any one of the first to third aspects, there is further provided a display unit 53 that displays a screen based on the skill data, and the control unit displays a change over time in the skill of the worker based on the skill data.

According to this configuration, it is possible to understand the change over time in the skill including the actual task and the educational task, and thus it is possible to evaluate the presence or absence of the effect of the education.

As a fifth aspect, in the skill management system 10 according to any one of the first to fourth aspects, the control unit 51 displays, based on the skill data, the number of times the worker has performed a task.

According to this configuration, it is possible to understand the proficiency of the skill based on the number of times the worker has performed a task.

As a sixth aspect, in the skill management system 10 according to any one of the first to fifth aspects, the control unit (education plan management system 20) acquires a degree of sufficiency of a resource required for the educational task, and presents the educational task that is performable based on the degree of sufficiency of the resource to the worker in a selectable manner.

According to this configuration, whether to perform education can be selected based on the degree of sufficiency of the resource.

### Reference Signs List

10: skill management system
15: task plan management system
16: task assistance system
17: bill of materials (BOM) system
18: task recording database
19: task analysis system
20: education plan management system
21: education assistance system
DB1: actual task database
DB2: educational task database

## Claims

1. A skill management system that manages skill of a worker, the skill management system comprising:
an actual task database that records actual task data that is data of an actual task acquired by the worker performing a task;
an educational task database that records educational task data that is data of an educational task acquired by the worker performing a task; and
a control unit that executes processing which is based on the actual task data and the educational task data,
wherein the actual task data and the educational task data each include a flag for identifying whether data is the actual task data or the educational task data, and skill data indicating the skill of the worker, the skill data being associated with the flag.

2. The skill management system according to Claim 1,
wherein the skill data is a task duration required for a task.

3. The skill management system according to Claim 2,
wherein the control unit acquires an average duration of the task, and executes notification indicating that education is required in a case where the task duration of the actual task data is longer than the average duration by a predetermined amount of time.

4. The skill management system according to Claim 1, further comprising:
a display unit that displays a screen based on the skill data,
wherein the control unit displays a change over time in the skill of the worker based on the skill data.

5. The skill management system according to Claim 4,
wherein the control unit displays, based on the skill data, the number of times the worker has performed a task.

6. The skill management system according to Claim 1,
wherein the control unit acquires a degree of sufficiency of a resource required for the educational task, and presents the educational task that is performable based on the degree of sufficiency of the resource to the worker in a selectable manner.
